# EUROPÄISCHE PATENTANMELDUNG

(11) **EP 3 686 317 A2**
(43) Veröffentlichungstag der Anmeldung: **29.07.2020**
(21) Anmeldenummer: 20152266.1
(22) Anmeldetag: 16.01.2020
(51) Int. Cl.: C25B 1/00, C25B 9/08, C25B 13/04, C25B 15/08, B23H 3/10

(54) **VERFAHREN ZUM ENTFERNEN VON CR(VI)-IONEN AUS EINER WÄSSRIGEN ELEKTROLYTLÖSUNG**

(30) Priorität: 24.01.2019 DE 102019200832
(71) Anmelder: MTU Aero Engines AG, 80995 München (DE)
(72) Erfinder: Feiling, Nicole, 80995 München (DE); Niegl, Max, 80995 München (DE); Könitzer, Martin, 80995 München (DE); Rast, Norbert, 80995 München (DE); Hill, Rudolf, 40764 Langenfeld (DE); Mauer, Dieter, 51375 Leverkusen (DE)

(57) **Zusammenfassung**

Die Erfindung betrifft ein Verfahren zum Entfernen von Cr(VI)-Ionen aus einer wässrigen Elektrolytlösung, insbesondere einer Elektrolytlösung für die elektrochemische Metallbearbeitung, welches die Reduktion von Cr(VI) zu Cr(III) mit Fe(II)-Ionen umfasst. Die Fe(II)-Ionen werden der Elektrolytlösung in Form einer wässrigen Salzlösung zugegeben, die mit einem mit Fe(II)-Ionen beladenen Ionenaustauscherharz in Kontakt gebracht wurde. Dadurch wird das Einschleppen von störenden Fremdionen wie beispielsweise Sulfationen in die Elektrolytlösung vermieden. Ferner betrifft die Erfindung eine Vorrichtung (1) zur elektrochemischen Bearbeitung eines Werkstücks (2) mittels einer wässrigen Elektrolytlösung (6), die einen Ionenaustauscher (11) aufweist, der mit einem mit Fe(II)-Ionen beladenen Ionenaustauscherharz bestückt ist.

## Beschreibung

### HINTERGRUND DER ERFINDUNG

### GEBIET DER ERFINDUNG

Die vorliegende Erfindung betrifft ein Verfahren zum Entfernen von Cr(VI)-Ionen aus einer wässrigen Elektrolytlösung, insbesondere einer Elektrolytlösung, die für die elektrochemische Metallbearbeitung eingesetzt wird, durch Reduktion der Cr(VI)-Ionen zu Cr(III)-Ionen mittels Zugabe einer wässrigen Fe(II)-Ionen enthaltenden Lösung. Anfallender Metallhydroxid-Niederschlag kann danach aus der so behandelten Elektrolytlösung abgetrennt werden. Ferner betrifft die Erfindung eine Vorrichtung, in der ein solches Verfahren zum Tragen kommt.

### STAND DER TECHNIK

Bei der elektrochemischen Bearbeitung (ECM: electrochemical machining; PECM: precise electrochemical machining) befindet sich zwischen Anode (zu bearbeitendem Werkstück) und Kathode (Werkzeug) eine Elektrolytlösung und es fließt ein elektrischer Strom, der das Werkstück (elektrisch leitend) abträgt. Als Elektrolyt wird eine Salzlösung, in der Regel Natriumnitrat, eingesetzt. Somit werden bei der Verwendung des ECM-Verfahrens die Legierungsbestandteile des Werkstückes anodisch aufgelöst und gehen in Lösung. Die entstandenen Metallkationen (z.B. Ni²⁺, Fe²⁺, Fe³⁺, Cr⁶⁺, usw.) reichern sich entweder kontinuierlich im Elektrolyten an oder sie bilden einen Metallhydroxid-Niederschlag, der z.B. durch Filtration aus dem System entfernt werden kann. Cr(VI)-Ionen reichern sich im Elektrolyten an. Diese Verunreinigung kann zu Prozessschwankungen führen. Des Weiteren wurde Cr(VI) von der ECHA (European Chemicals Agency) als SVHC = CMR-Stoff (karzinogen, mutagen, reproduktionstoxisch) eingestuft. Somit muss Cr(VI) durch Reduktion zu Cr(III) und anschließende Fällung aus dem Prozess bzw. der Elektrolytlösung entfernt werden.

Übliche Aufbereitungsverfahren zur Reduktion von Cr(VI)-Ionen sind die diskontinuierliche Aufbereitung mit Eisen(II)sulfat sowie die kontinuierliche Aufbereitung mit Natriumdithionit. Beide Verfahren haben den Nachteil, dass dadurch Sulfationen entstehen bzw. in den Elektrolyten eingeschleppt werden, welche sich kontinuierlich in der Elektrolytlösung anreichern. Die Elektrolytlösung muss regelmäßig verworfen bzw. teilerneuert werden, um Prozessschwankungen zu vermeiden.

In der DE 102016 004 819 A1 wird ein Verfahren zum Entfernen von Chromverbindungen aus Elektrolytlösungen beschrieben. Hierbei wird Ascorbinsäure für die Reduktion von Cr(VI) zu Cr(III) eingesetzt. Als Vorteil wird genannt, dass keine elektrolytfremden Ionen zum Einsatz kommen. Die Abbauprodukte der Ascorbinsäure verbleiben jedoch im Elektrolyten und können zu unerwünschten Nebenreaktionen führen.

In der DE 10 247 318 A1 wird ein Verfahren zur Metallabreicherung in Nitrat-Elektrolyten beschrieben. Durch Elektrodialyse (Membranverfahren) wird der Nitrat-haltige Elektrolyt aus dem System, welches mit Schwermetallkationen verunreinigt ist, entfernt. Die Metallkationen werden als Konzentrat abgetrennt und verworfen. Das Verfahren wird diskontinuierlich durchgeführt.

In der EP 0 832 042 B1 wird ein Verfahren zur Entfernung von Chrom- und Eisenverbindungen aus einer wässrigen Elektrolytlösung beschrieben. Dabei wird Wasserstoffperoxid unter Anpassung des pH-Wertes verwendet. Das Verfahren wird diskontinuierlich durchgeführt.

In der EP 2 386 377 B1 wird ein Verfahren zur Gewinnung eines wiederverwendbaren Elektrolyten aus der ECM-Bearbeitung von Nickel, Eisen und Chrom beschrieben. Durch Zugabe einer organischen Lösung wird eine zweiphasige heterogene Mischung hergestellt. Nach mehreren Prozessschritten wird die wässrige Phase wieder abgetrennt (wiederverwendbarer Elektrolyt). Das Verfahren wird diskontinuierlich durchgeführt.

In der DE 33 03 585 C1 wird ein Verfahren zur Behandlung von Natriumnitrat-Elektrolyten bei der elektrochemischen Bearbeitung von eisenhaltigen Werkstoffen beschrieben. Durch den Einsatz von Ozon (Oxidation von Nitrit zu Nitrat) werden Passivierungen vermindert. Eine Verunreinigung des Elektrolyten durch Cr(VI) wird in diesem Dokument nicht beschrieben.

### OFFENBARUNG DER ERFINDUNG

### AUFGABE DER ERFINDUNG

Es ist deshalb Aufgabe der vorliegenden Erfindung, ein Verfahren zur Reduktion und Entfernung von Cr(VI)-Ionen aus einer wässrigen Elektrolytlösung bereitzustellen, das einfach und kontinuierlich durchgeführt werden kann und insbesondere eine einfache Abtrennung von Chromionen aus der Elektrolytlösung ermöglicht, ohne dass dadurch (insbesondere potentiell störende) Fremdionen wie beispielsweise Sulfationen in den Elektrolyten eingeschleppt werden.

### TECHNISCHE LÖSUNG

Diese Aufgabe wird gelöst durch ein Verfahren mit den Merkmalen des unabhängigen Verfahrensanspruchs. Ferner wird die Aufgabe gelöst durch eine Vorrichtung gemäß Anspruch 15 gelöst. Vorteilhafte Ausgestaltungen sind Gegenstand der abhängigen Ansprüche.

Im erfindungsgemässen Verfahren zur Entfernung von Cr(VI)-Ionen aus einer wässrigen Elektrolytlösung, welches die Reduktion von Cr(VI) zu Cr(III) mit Fe(II)-Ionen umfasst, werden die Fe(II)-Ionen der Elektrolytlösung in Form einer wässrigen Salzlösung zugegeben, die zuvor mit einem mit Fe(II)-Ionen beladenen Ionenaustauscherharz oder dergleichen in Kontakt gebracht wurde. Dadurch wird vermieden, dass Gegenionen (Fremdionen), die im Falle der Verwendung einer Fe(II)-Salzlösung vorhanden wären (wie beispielsweise Sulfationen im Falle der Verwendung von Fe(II)sulfat) in die Elektrolyt-Lösung eingeschleppt werden.

Das In-Kontakt-Bringen der wässrigen Salzlösung mit dem beladenen Ionenaustauscherharz kann beispielsweise dadurch bewerkstelligt werden, dass die wässrige Salzlösung über ein Ionenaustauscherbett oder durch eine Ionenaustauschersäule geleitet wird.

In einer bevorzugten Ausgestaltung des erfindungsgemässen Verfahrens handelt es sich bei der Elektrolytlösung um eine neutrale oder basische Lösung und insbesondere um eine wässrige Elektrolytlösung, die für die elektrochemische Metallbearbeitung (ECM/PECM) eines Werkstücks, das eine Chrom-haltige Metalllegierung umfasst, eingesetzt wird.

Bei dem Werkstück kann es sich um ein Werkstück aus einer beliebigen Metalllegierung handeln, bei dessen elektromechanischer Bearbeitung (unter anderem) Cr(VI)-Ionen gebildet werden und in Lösung gehen. Beispielsweise kann das Werkstück aus einer Nickelbasislegierung bestehen oder diese zumindest umfassen. Weitere Ionen, die bei der elektromechanischen Bearbeitung eines Werkstücks entstehen können, sind beispielsweise Ni²⁺, Co²⁺, Fe³⁺ und Mo²⁺.

Die Elektrolytlösung enthält vorzugsweise Natriumnitrat, kann aber auch andere Elektrolyte statt oder zusätzlich zu Natriumnitrat enthalten. Nicht-beschränkende Beispiele für derartige Elektrolyte schliessen Natriumchlorid, Natriumbromid, Kaliumnitrat, Natriumnitrit, Kaliumbromid, Natriumchlorat und Natriumperchlorat ein.

Obgleich es sich bei der der wässrigen Elektrolytlösung erfindungsgemäss zuzugebenden wässrigen Fe(II)-haltigen Salzlösung um eine beliebige Salzlösung handeln kann, ist diese Salzlösung im Falle einer Elektrolytlösung für die elektromechanische Bearbeitung eines Werkstücks zweckmässigerweise im Wesentlichen identisch mit der zu behandelnden Elektrolytlösung, mit der Ausnahme, dass sie zusätzlich Fe(II)-Ionen (und gegebenenfalls kleinere Mengen an weiteren nicht störenden Metallionen aus einer bereits erfolgten Metallbearbeitung) enthält (und im Wesentlichen frei von Cr(VI)-Ionen ist).

In einer bevorzugten Ausgestaltung des erfindungsmässen Verfahrens wird das mit Fe(II)-Ionen beladene Ionenaustauscherharz, das zur Herstellung der wässrigen Fe(II)-haltigen Salzlösung eingesetzt wird, durch Behandeln eines (bevorzugt stark) sauren Ionenaustauscherharzes mit einer wässrigen Fe(II)-Salzlösung hergestellt. Bei der wässrigen Fe(II)-Salzlösung kann es sich beispielsweise um eine Fe(II)sulfatlösung handeln. Es können aber auch andere Fe(II)-Salzlösungen wie beispielsweise Fe(II)chloridlösungen zu diesem Zweck eingesetzt werden.

Insbesondere im Falle einer neutralen oder basischen Elektrolytlösung führt die Reduktion von darin enthaltenem Cr(VI) durch Fe(II) zur Ausfällung der entsprechenden Metallhydroxide (also in der Regel Cr(III)- und Fe(III)-hydroxid). Diese Hydroxide (und somit auch das zu entfernende Chrom) können dadurch einfach aus der behandelten Elektrolytlösung abgetrennt werden, beispielsweise durch Filtration und/oder Zentrifugation.

Das erfindungsgemässe Verfahren kann kontinuierlich oder diskontinuierlich durchgeführt werden. Beispielsweise kann im kontinuierlich durchgeführten Verfahren die wässrige Fe(II)-haltige Lösung der für die elektrochemische Metallbearbeitung verwendeten Elektrolytlösung kontinuierlich und vorzugsweise im Wesentlichen stöchiometrisch in Abhängigkeit von der bei der elektrochemischen Metallbearbeitung anfallenden Menge an Cr(VI)-Ionen zudosiert werden. Die Menge bzw. Konzentration der entstandenen Cr(VI)-Ionen kann beispielsweise über die bei der Metallbearbeitung geflossene Strommenge bestimmt werden. Durch eine derartige Steuerung der Zugabe der Fe(II)-haltigen Lösung kann der Chrom(VI)-Gehalt der Elektrolytlösung auf einen definierten Sollwert eingestellt werden.

In einer bevorzugten Ausgestaltung des erfindungsgemässen Verfahrens wird das Verfahren so durchgeführt, dass die Menge an kontinuierlich zudosierter Fe(II)-Salzlösung derart ist, dass die Konzentration der Cr-Ionen in der Elektrolytlösung im g/l-Bereich, vorzugsweise unter 1 g/l, liegt. Das erfindungsgemaesse Verfahren ermoeglicht jedoch prinzipiell eine Konzentration an Cr(VI)-Ionen in der Elektrolyt-Loesung, die 0,03 mg/l nicht übersteigt. Ebenfalls bevorzugt ist es, dass mit dem erfindungsgemässen Verfahren mehr als 50 %, beispielsweise mindestens 60 %, mindestens 70 %, mindestens 80 %, oder mindestens 90 %, der in der Elektrolytlösung vorhandenen Cr(VI)-Ionen reduziert werden.

Das erfindungsgemässe Verfahren kann beispielsweise im Wesentlichen analog zu dem in der DE 10 2016 004 819 beschriebenen Verfahren durchgeführt werden, wobei anstelle von Ascorbinsäure die erfindungsgemäss verwendete wässrige Fe(II)-Ionen enthaltende Elektrolytlösung eingesetzt wird.

Obgleich das erfindungsgemässe Verfahren anhand der Entfernung von Cr(VI)-Ionen aus einer wässrigen Elektrolytlösung beschrieben wurde, wird der Fachmann erkennen, dass dieses Verfahren auch zur Entfernung anderer (störender) Metallionen, die sich durch Fe(II)-Ionen reduzieren lassen und in reduzierter Form im neutralen bis basischen Bereich vorzugsweise einen schwerlöslichen Niederschlag bilden, eingesetzt werden kann. Die vorliegende Erfindung erfasst auch derartige Verfahren.

Obwohl die vorliegende Erfindung anhand von möglichen Ausgestaltungen detailliert beschrieben worden ist, ist für den Fachmann selbstverständlich, dass die Erfindung nicht auf diese Ausgestaltungen beschränkt ist, sondern dass vielmehr Abwandlungen in der Weise möglich sind, dass einzelne Merkmale weggelassen oder Merkmale andersartig kombiniert werden können, solange der Schutzbereich der beigefügten Ansprüche nicht verlassen wird. Die vorliegende Offenbarung offenbart sämtliche Kombinationen aller vorgestellten Einzelmerkmale.

### FIGURENBESCHREIBUNG

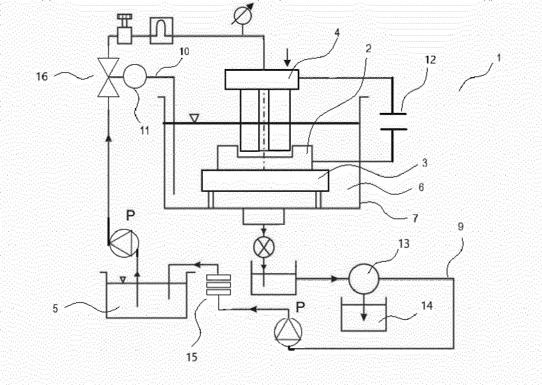

Fig. 1 zeigt eine bevorzugte Ausgestaltung einer Vorrichtung 1 zur elektrochemischen Bearbeitung von Werkstücken 2, genauer gesagt zur elektrochemischen Metallbearbeitung (ECM/PECM), mit einem Arbeitstisch 3, der dazu angepasst ist, ein zu bearbeitendes Werkstück 2 zu tragen und einem Elektrodenwerkzeug 4 das dazu angepasst ist, für einen Bearbeitungsvorgang auf das Werkstück 2 zugestellt zu werden. Ebensogut ist eine Zustellung des Arbeitstisches 3 zum Werkzeug 4 hin möglich und angedacht. Die Vorrictung weist einen Vorratstank 5 auf aus welchem heraus eine Elektrolytlösung 6 dem Werzeug 4 zugeführt wird. Eine Spannungsquelle 12 sorgt für eine niedervoltige Spannung zwischen Werkzeug 4 und Werstück 2. Werkzeug 4 und Werkstück 2 werden beim Bearbeiten von der Elektrolylösung 6 umspült was aufgrund der Potentialdifferenz zwischen Werkzeug 4 und Werkstück 2 zur Materialabtragung führt. Hierzu wird in der dargestellten Vorrichtung 1 die Elektolytlösung 6 mittels zumindest einer Pumpe P über eine Zufuhrleitung 8 aus dem Vorratstank 5 dem zu bearbeitenden Werkstück 2 zugeführt. Ein Zwischenbehälter 7 fängt die Elektrolytlösung 6 auf, nachdem Werkstück 2 und Werkzeug 4 umspült wurden. Aus dem Zwischenbehälter 7 führt eine Rückführleitung 9 zurück in den Vorratstank 5. In der Rückführleitung 9 sind diverse Wiederaufbereitungseinrichtungen zum Reinigen und Entgiften der Elektrolylösung 6 angeordnet. Die Wiederaufbereitungseinrichtungen umfassen eine Zentrifuge 13, die Feststoffe als Schlamm 14 abscheidet, sowie Filter 15, die von der Elektorlytlösung 6 durchlaufen werden. Die in Fig. 1 dargestellte Vorrichtung 1 weist ferner eine Bypassleitung 10 auf, welche direkt vom Vorratstank 5 in den Zwsichenbehälter 7 führt. Hierdurch lässt sich die Elektrolytlösung 6 am Werkstück vorbei über den Zwischenbehälter 7 in den Vorratstank 5 zirkulieren. Über ein Drei-Wege-Ventil 16 lässt sich das Verhältnis der Volumenströme zwischen Bypasleitung 10 und Werkzeug 4 einstellen bzw. einer der beiden Ströme komplett abstellen. Im dargestellten beispiel ist in der Bypassleitung 10 ein Ionenaustauscher 11 mit einem mit Fe(II)-Ionen beladenen Ionenaustauscherharz angeordnet.

Dies ermöglicht die kontinuierliche ode diskontinuierliche Zufuhr einer Fe(II)-Salzlösung in die Elektroltlösung 6 gemäß einem der vorstehend beschriebenen Verfahren. Entsprechend weist der Ionenaustauscher 11 bevorzugt die Merkmale auf, wie sie bereits eingehend bei der Beschreibung des erfindungsgemäßen Verfahrens beschrieben wurden. Eine weitere vorteilhafte Anordnungsmöglichkeit des Inenaustauschers 11 ist in der Rückführleitung 9 stromaufwärts der Zentrifuge 13 und/oder des Filters 15. Es ist ebensogut auch eine Anordnung des Ionenaustauschers 11 in der Zufuhrleitung 8 möglich.

### Bezugszeichen

- 1: Vorrichtung zur elektrochemischen Bearbeitung
- 2: Werkstück
- 3: Arbeitstisch
- 4: Elektrodenwerkzeug
- 5: Vorratstank
- 6: Elektrolytlösung
- 7: Zwischenbehälter
- 8: Zufuhrleitung
- 9: Rückführleitung
- 10: Bypassleitung
- 11: Ionenaustauscher
- 12: Spannungsquelle
- 13: Zentrifuge
- 14: Schlamm/Schlammbehälter
- 15: Filter
- 16: Drei-Wege-Ventil
- P: Pumpe

## Patentansprüche

1. Verfahren zum Entfernen von Cr(VI)-Ionen aus einer wässrigen Elektrolytlösung, welches die Reduktion von Cr(VI) zu Cr(III) mit Fe(II)-Ionen umfasst, **dadurch gekennzeichnet, dass** die Fe(II)-Ionen der Elektrolytlösung in Form einer wässrigen Salzlösung zugegeben werden, die mit einem mit Fe(II)-Ionen beladenen Ionenaustauscherharz in Kontakt gebracht wurde.

2. Verfahren gemäss Anspruch 1, **dadurch gekennzeichnet, dass** die wässrige Elektrolytlösung neutral oder basisch ist.

3. Verfahren gemäss Anspruch 1 oder Anspruch 2, **dadurch gekennzeichnet, dass** die wässrige Elektrolytlösung für die elektrochemische Metallbearbeitung (ECM/PECM) eingesetzt wird.

4. Verfahren gemäss Anspruch 3, **dadurch gekennzeichnet, dass** es sich bei der wässrigen Fe(II)-haltigen Salzlösung um frische oder aufbereitete Elektrolytlösung für die elektrochemische Metallbearbeitung handelt.

5. Verfahren gemäss irgendeinem der Ansprüche 3 und 4, **dadurch gekennzeichnet, dass** die elektrochemische Metallbearbeitung die Bearbeitung eines eine chromhaltige Legierung, vorzugsweise eine Nickelbasislegierung, umfassenden Werkstücks umfasst.

6. Verfahren gemäss irgendeinem der Ansprüche 1 bis 5, **dadurch gekennzeichnet, dass** die Elektrolytlösung Natriumnitrat enthält.

7. Verfahren gemäss irgendeinem der Ansprüche 1 bis 6, **dadurch gekennzeichnet, dass** das mit Fe(II)-Ionen beladene Ionenaustauscherharz durch Behandeln eines sauren Ionenaustauscherharzes mit einer wässrigen Fe(II)-Salzlösung hergestellt wurde.

8. Verfahren gemäss Anspruch 7, **dadurch gekennzeichnet, dass** das stark saure Ionenaustauscherharz ein Harz in der Na-Form ist und/oder die wässrige Fe(II)-Salzlösung eine Fe(II)-Sulfatlösung ist.

9. Verfahren gemäss irgendeinem der Ansprüche 1 bis 8, **dadurch gekennzeichnet, dass** bei der Reduktion entstehender Metallhydroxid-Niederschlag entfernt wird.

10. Verfahren gemäss Anspruch 9, **dadurch gekennzeichnet, dass** die Entfernung des Niederschlags durch Filtration und/oder Zentrifugieren erfolgt.

11. Verfahren gemäss irgendeinem der Ansprüche 1 bis 10, **dadurch gekennzeichnet, dass** das Verfahren kontinuierlich oder diskontinuerlich durchgeführt wird.

12. Verfahren gemäss irgendeinem der Ansprüche 3 bis 11, **dadurch gekennzeichnet, dass** die Fe(II)-haltige Lösung der Elektrolytlösung kontinuierlich und in Abhängigkeit von der bei der elektrochemischen Metallbearbeitung anfallenden Menge an Cr(VI)-Ionen zudosiert wird.

13. Verfahren gemäss Anspruch 12, **dadurch gekennzeichnet, dass** durch Steuerung der Zugabe der Fe(II)-haltigen Lösung der Chromgehalt der Elektrolytlösung auf einen definierten Sollwert eingestellt wird.

14. Verfahren gemäss irgendeinem der Ansprüche 1 bis 13, **dadurch gekennzeichnet, dass** das Verfahren so durchgeführt wird, dass die Konzentration der Cr(VI)-Ionen in der Elektrolytlösung nicht mehr als 1 g/l beträgt und/oder mehr als 50 % der in der Elektrolytlösung vorhandenen Cr(VI)-Ionen reduziert werden.

15. Vorrichtung (1) zur elektrochemischen Bearbeitung von Werkstücken (2) mit
einem Arbeitstisch (3), der dazu angepasst ist, ein zu bearbeitendes Werkstück (2) zu tragen;
einem Elektrodenwerkzeug (4);
einem Vorratstank (5) für eine Zufuhr einer Elektrolytlösung (6);
einer Zufuhrleitung (8) zum Zuführen der Elektrolytlösung (6) aus dem Vorratstank (5) zu dem zu bearbeitenden Werkstück (2) mittels zumindest einer Pumpe (P);
einem Zwischenbehälter (7) zum Auffangen der Elektrolytlösung (6), die dem Werkstück (2) zugeführt wurde;
einer Rückführleitung (9) zum Zurückführen der Elektrolytlösung (6) in den Vorratstank (5) aus dem Zwischenbehälter (7), und
optional einer Bypassleitung (10) zum Zirkulieren der Elektrolytlösung (6) über den Zwischenbehälter (7) in den Vorratstank (5) am Werkstück vorbei,
**dadurch gekennzeichnet, dass**
in der Zufuhrleitung (8), der Rückführleitung (9) und/oder der Bypassleitung (10) ein Ionenaustauscher (11) mit einem mit Fe(II)-Ionen beladenen Ionenaustauscherharz angeordnet ist.
